Europäisches Patentamt

European Patent Office

Office européen des brevets

(19)

(11) **EP 0 864 545 B1**

(12) **EUROPEAN PATENT SPECIFICATION**

(45) Date of publication and mention
of the grant of the patent:
**28.01.2004 Bulletin 2004/05**

(51) Int Cl.[7]: **C03C 3/087**, C03C 4/02,
C03C 4/08, B32B 17/10,
C03C 27/12

(21) Application number: **98301797.1**

(22) Date of filing: **11.03.1998**

(54) **Method for the production of glass sheets and their use**

Verfahren zur Herstellung von Glasscheiben und ihre Verwendung

Méthode de production de plaques en verre et leur utilisation

(84) Designated Contracting States:
**BE DE ES FR GB IT LU SE**

(30) Priority: **15.03.1997 GB 9705426**

(43) Date of publication of application:
**16.09.1998 Bulletin 1998/38**

(73) Proprietors:
• **PILKINGTON PLC**
**St. Helens, Merseyside WA10 3TT (GB)**
• **Pilkington Automotive Limited**
**Merseyside WA10 3TT (GB)**

(72) Inventors:
• **Fyles, Kenneth Melvin**
**Garswood, Wigan WN4 OSE, Lancashire (GB)**

• **Pennells, Peter Jack**
**Stratford-on-Avon,**
**Warwickshire CV37 6NW (GB)**

(74) Representative: **Halliwell, Anthony Charles et al**
**Pilkington plc,**
**Group Patents Department,**
**Pilkington Technology Centre,**
**Hall Lane,**
**Lathom**
**Ormskirk, Lancashire L40 5UF (GB)**

(56) References cited:
**EP-A- 0 565 835        EP-A- 0 598 305**
**EP-A- 0 644 164        EP-A- 0 677 492**
**EP-A- 0 812 678        WO-A-94/25407**
**WO-A-96/28394        US-A- 3 351 518**

## Description

The invention relates to a process for the production of high performance solar control glass sheets for use in automotive glazing, and use of the glass sheets in production of automotive glazings.

It has previously been proposed, in EP 0 469 446B, to produce green tinted, ultra-violet absorbing glasses for use in automotive glazing by using a colourant portion containing iron in an amount of at least 0.85% by weight and up to 0.5% cerium. To achieve the desired ultra violet absorbance, this patent proposes to use either more than 0.2% by weight cerium, or an unusually low ratio of ferrous iron to ferric iron such that the ratio of ferrous iron (calculated as weight of ferrous oxide) to total iron (calculated as weight of ferric oxide) is about 0.16. All the Examples relate to glasses 3.9 mm thick.

EP 0 598 305A similarly relates to green tinted, ultra-violet absorbing glasses for use in automotive glazing, but proposes to achieve the desired ultra-violet absorbance by using increased levels of titania in place of either the ceria or the low ratio of ferrous to ferric iron used in EP 0 469 446B. The twenty four Examples in this application all have total iron contents in the range 0.65% to 0.93% and twenty one of the twenty four contain titania in an amount of 0.15% by weight or more.

EP 0 812 678A, WO-A-94 25407 and EP 0 565 835A all similarly relate to green tinted, ultra-violet absorbing glasses for use in automotive glazings, the glasses all containing up to about 1% by weight total iron as a colorant.

EP 0 812 678A, published after the priority date of the present application, specifies that such glass composition, optimised for use in the production of 3 mm monolithic toughened glazings having a light transmission of at least 70% and a low direct solar heat transmission, may also be used, in the form of a tinted ply laminated to a clear glass ply, to form a laminated vehicle glazing having a visible light transmission of at least 75%.

WO-A-94 25407 and EP 0 565 835A each describe the use of such a glass, i.e. a green tinted, ultra-violet absorbance glass containing up to about 1% by weight total iron, in monolithic or laminated form (apparently employing two panes of the same composition laminated together) in automotive glazings.

EP 0 644 164A also relates to an iron containing solar control glass for use in automotive glazing (whether in monolithic or laminated form), and aims to produce optimum properties in a glass thickness in the range 3.0 to 3.3 mm. The single example has a colourant portion comprising 0.95% by weight of iron (calculated as ferric oxide) and a ratio of ferrous iron (calculated as weight of ferrous oxide) to total iron (calculated as weight of ferric oxide) of 0.30.

EP 0 644 164A envisages producing a solar control glass with its properties optimised for automotive use over a particular commonly used glass thickness range. It would not normally be considered economic to optimise solar control glass components for other less commonly used glass thickness in view of the lower volumes involved. However, we have now found that a tinted glass composition providing substantially optimum solar control properties for use in producing monolithic toughened vehicle windows of thickness around 3.5 mm requiring a visible light transmission of 70% is also suitable, when used at a standard outer pane thickness of about 2.1 mm in conjunction with a clear inner pane, for the production of laminated windshields having a substantially optimised solar control performance for the required windshield light transmission of at least 75%. Further, the same glass may be used to provide laminated side and rear glazings comprising two panes of the same tinted glass composition each having a thickness of about 1.7 mm, said laminated glazings having a visible light transmission of at least 70% providing a substantially optimised solar control performance. We have further found that a glass of appropriate properties may be produced using, as colourant, iron in an amount (calculated as $Fe_2O_3$) of from 0.9% to 1.15% by weight, and at a ferrous ion to total iron ratio in the range 0.18 to 0.35.

According to the present invention there is provided a process for the production of glass sheets with optimised properties for the production of automotive glazing which comprises preparing a glass melt comprising, as colourant, iron in an amount of from 0.9 to 1.15% by weight, with a ferrous iron to total iron ratio in the range 0.18 to 0.35, and successively forming molten glass of said composition into glass sheet of thickness in the range 1.9 mm to 2.3 mm, and glass sheet of thickness in one of the two ranges

    3.3 mm to 3.8 mm

  and 1.5 mm to 1.8 mm.

In a preferred production process, the molten glass is successively formed into glass sheet of three different thicknesses, each of said thicknesses being within a different one of said ranges 1.9 mm to 2.3 mm, 3.3 mm to 3.8 mm and 1.5 mm to 1.8 mm.

Obviously, the different (thickness) glass sheets may be produced in any order, and possibly with sheets of the same composition but an additional thickness produced in between (indeed, in practice, a ribbon of intermediate thickness will inevitably be produced on transition between any two thicknesses). Whatever the order of production, the important advantage is that two different products, each optimised for a different purpose, can be produced without the need for a time consuming change of composition, and consequently without any glass loss resulting from a need to change composition (and with only the relatively minor glass loss which inevitably results from the thickness change).

The glass of thickness 1.9 mm to 2.3 mm may advantageously be used for the production of a laminated automotive windshield comprising a tinted glass pane having a thickness in the range 1.9 mm to 2.3 mm, laminated to a clear glass pane, whereby the windshield has a light transmission of at least 75% and a direct solar heat transmission of less than 56%.

The glass of thickness 3.3 mm to 3.8 mm may advantageously be used for the production of a toughened automotive glazing having a thickness in the range 3.3 mm to 3.8 mm, the glazing having a light transmission of at least 70% and a direct solar heat transmission of less than 46%.

The glass of thickness 1.9mm to 2.3mm may advantageously be used for the production of laminated automotive side lights or rear lights comprising two panes of the same tinted glass.

Thus, according to a further aspect of the invention, tinted glass sheets produced in accordance with the invention are used for the production of at least two different automotive products (one being a laminated windshield) and preferably for the production of each of the three products described above.

The laminated automotive windshield defined above preferably has a solar heat transmission of less than 55%. In that product, the said glass pane comprising iron as colourant preferably has a thickness of about 2.1 mm and the clear glass pane preferably has a thickness of about 1.5 mm. It is preferred to use the pane comprising iron as colourant as the outer pane.

The toughened automotive glazing as defined above is an automotive glazing comprising a toughened glass pane having a thickness in the range 3.3 mm to 3.8 mm, preferably 3.4 to 3.6 mm, and a direct solar heat transmission preferably less than 45%.

The laminated automotive side light or rear light defined above is a laminated automotive glazing, being a side glazing or rear glazing, preferably comprising two panes each of thickness in the range 1.5 mm to 1.8 mm, especially 1.6 mm to 1.75 mm, the glazing preferably having a light transmission of at least 75% and a direct solar heat transmission less than 46%, especially less than 45%.

The total iron content of the glass is calculated as ferric oxide. The light transmission is measured using C.I.E. Illuminant A over the wavelength range 360 nm to 780 nm at 10 nm intervals; the direct solar heat transmission (DSHT) is the direct solar heat transmitted at Air Mass 2 (simulating rays from the sun incident at an angle of 30°) measured over the wavelength range 300 to 2100 nm at 50 nm intervals. All the transmissions referred to in the present specification and claims are calculated by applying the rectangular rule to the measured values.

Suitable ferrous to total iron ratios used are readily achieved by most modem float glass plants and do not require special conditions. It is generally preferred to operate at a ratio of at least 0.20 and less than 0.27, especially between 0.22 and 0.26.

The tinted glasses used in the present invention are green in colour, and will preferably exhibit a dominant wavelength in the range 495 - 520 nm and an excitation purity of 2 - 5%.

The iron oxide used in the process according to the present invention may be incorporated in a standard soda lime silica glass. Such glasses typically have a composition with the following ranges:

| $SiO_2$ | 65% - 75% (by weight) |
|---------|-----------------------|
| $Na_2O$ | 10% - 18% |
| $K_2O$ | 0% - 5% |
| MgO | 0% - 5% |
| CaO | 4% - 14% |
| $Al_2O_3$ | 0% - 5% |

In addition to the iron, they may contain other additives, including melting and refining aids such as sulphate and carbon sources and/or impurities, provided the specified properties are achieved. If desired, titanium may be added (for example by feeding iron as ilmenite), usually in amounts of up to about 0.5% by weight, although generally no more than impurity amounts, i.e. less than 0.1%, normally less than 0.05% by weight, will be present, in order to avoid the effect of yellowing the colour of the glass. When titanium is added, the dominant wavelength will rise, possibly to 540 nm, depending on the amount of titanium present, although dominant wavelengths less than 515 nm are preferred.

Cobalt may be added in trace amounts to modify the colour of the glass.

The accompanying Table 1 sets out details of the colourant composition, pane thickness, and corresponding properties of exemplary toughened monolithic automotive glazings. In each case, the glazing is fabricated from a glass produced by incorporating the colourants in a base glass containing, in percentages by weight:

| 72.8% | $SiO_2$ |
|-------|---------|
| 1.0% | $Al_2O_3$ |
| 12.9% | $Na_2O$ |

(continued)

| 0.6% | $K_2O$ |
|------|--------|
| 8.4% | $CaO$ |
| 4.0% | $MgO$ |
| 0.2% | $SO_2$ |

The total iron content is specified in weight percent ferric oxide ($Fe_2O_3$) assuming all the iron is present as ferric oxide. References to the ratio of ferrous iron to total iron in the present specification and claims are reference to ratios determined optically and given by the following formula, in which $T_{1000\ nm}$ is the percentage transmission of radiation of wavelength 1000 nm through a sample of glass L mm thick, and $Fe_2O_3$ is the total iron content of the glass (calculated as ferric oxide) as the percentage by weight.

$$\text{Ratio ferrous iron/total iron} = \frac{[\log_{10} (\frac{100}{T_{100nm}}) - 0.036]\ 1.152}{L \times Fe_2O_3}$$

The resultant value represents the proportion of the iron content which is present in the ferrous (as opposed to ferric) state. LT represents the percentage of visible light transmitted and DSHT represents the direct solar heat transmission both measured and calculated as described above. "UV ISO" is the ultra violet transmission of the glass over the wavelength range 280 nm to 380 nm in 10 nm intervals in accordance with ISO 9050, while "UV Parry Moon" is the ultra violet transmission measured over the wavelength range 300 nm to 400 nm at 10 nm intervals under Parry Moon 1940 Observer Conditions at Air Mass 2.

Table 2 shows the properties of exemplary laminated automotive windshields produced using a tinted outer pane of the thickness specified of the glass composition of Example 5, Example 6 or Example 9 laminated to a clear 2.1 mm inner pane with a 0.76 mm polyvinylbutyral interlayer.

Table 3 shows the properties of exemplary laminated automotive side glazings comprising two tint panes each of the thickness specified of the glass composition of Examples 5 or Example 6 laminated together with a 0.76 mm polyvinylbutyral interlayer.

Looking at the glazings obtained using the glasses of Examples 5 and 6, it will be seen that

(a) high performance (DSHTs of 44.0% and 42.3%) solar control toughened automotive glazings of thickness about 3.5 mm suitable for use where a light transmission of at least 70% is required, for example, for front side glazings (Table 1),
(b) high performance (DSHTs of 54.4% and below) solar control laminated automotive windshields with an outer tinted pane thickness of about 2.1 mm (and the regulation minimum 75% light transmission, see Table 2) and
(c) high performance (DSHTs of 43.6% and below) solar control laminated automotive glazings of thickness about 4 mm (including a 0.76 mm thick interlayer of polyvinylbutyral) suitable for use where a light transmission of at least 70% is required, for example, for front side glazings (Table 3)

can all be produced from a single glass composition, without the need to use different glass compositions for the different products.

Table 1

| Example | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| $Fe_2O_3$ (wt%) | 1.08 | 0.95 | 1.00 | 0.92 | 1.04 | 1.10 | 1.05 | 1.15 | 0.90 | 1.10 | 0.90 | 0.95 | 0.94 | 0.90 | 1.00 | 1.08 |
| Optical Ferrous state % | 24.7 | 26.8 | 22.6 | 24.7 | 25.0 | 25.0 | 23.6 | 20.5 | 34.8 | 21.5 | 30.0 | 25.8 | 30.0 | 35.0 | 26.8 | 21.6 |
| $Co_3O_4$ (ppm) | - | - | 6 | 9 | - | - | - | - | - | 3 | - | 5 | - | - | - | - |
| $TiO_2$ (wt%) | - | - | 0.10 | 0.05 | 0.05 | 0.05 | 0.06 | 0.05 | 0.1 | 0.05 | 0.30 | 0.20 | 0.04 | 0.4 | 0.05 | 0.25 |
| Thickness (mm) | 3.30 | 3.60 | 3.80 | 3.70 | 3.50 | 3.40 | 3.70 | 3.50 | 3.45 | 3.50 | 3.50 | 3.50 | 3.50 | 3.30 | 3.50 | 3.50 |
| LT (ILL A) % | 71.3 | 71.8 | 70.4 | 70.7 | 71.6 | 70.1 | 70.5 | 70.3 | 70.2 | 70.5 | 71.4 | 71.4 | 71.2 | 70.4 | 71 | 71.1 |
| DSHT % | 44.7 | 44.2 | 44.4 | 44.9 | 44.0 | 42.3 | 43.2 | 44.7 | 41.0 | 44.9 | 43.2 | 44.9 | 42.8 | 41.3 | 43.5 | 45.0 |
| a* (ILL C) | -8.6 | -8.8 | -8.9 | -8.6 | -9.1 | -9.2 | -9.3 | -8.7 | -10.0 | -8.6 | -9.6 | -8.8 | -9.3 | -10.3 | -9.1 | -8.8 |
| b* (ILL C) | 1.6 | 0.5 | 2.1 | 0.3 | 1.5 | 2.1 | 2.5 | 4.1 | -0.9 | 3.0 | 2.1 | 1.8 | -0.1 | 2.1 | 1.0 | 4.7 |
| UV ISO 9050 % | 17.0 | 19.1 | 16.0 | 18.7 | 16.9 | 15.9 | 15.4 | 13.4 | 22.0 | 14.6 | 20.0 | 18.7 | 20.2 | 21.5 | 18.4 | 14.7 |
| UV Parry Moon (rectangular) % | 38.4 | 41.3 | 36.8 | 40.7 | 38.2 | 36.6 | 36.0 | 33.0 | 44.3 | 34.8 | 41.0 | 40.0 | 42.6 | 42.0 | 40.0 | 34.2 |
| Dominant wavelength (nm) | 500 | 497 | 503 | 496 | 501 | 502 | 504 | 519 | 494 | 508 | 502 | 501 | 495 | 502 | 498 | 527 |
| Purity % | 3.5 | 4.4 | 3.2 | 4.5 | 3.7 | 3.4 | 3.3 | 2.5 | 6.0 | 2.6 | 3.6 | 3.4 | 5.1 | 4.0 | 4.1 | 2.8 |

Table 2

| Outer pane mm | Glass composition | LT % | DSHT% | a* | b* |
|---|---|---|---|---|---|
| 2.0 mm | Ex 5 | 78.5 | 54.4 | -6.1 | 1.7 |
| 2.0 mm | Ex 6 | 77.5 | 53.1 | -6.4 | 1.7 |
| 2.0 mm | Ex 9 | 77.8 | 51.4 | -6.8 | -0.1 |
| 2.1 mm | Ex 5 | 77.9 | 53.4 | -6.4 | 1.8 |
| 2.1 mm | Ex 6 | 76.9 | 52.0 | -6.6 | 1.7 |
| 2.1 mm | Ex 9 | 77.2 | 50.4 | -7.1 | -0.1 |
| 2.2 mm | Ex 5 | 77.3 | 52.3 | -6.6 | 1.8 |
| 2.2 mm | Ex 6 | 76.7 | 51.6 | -6.7 | 1.8 |
| 2.2 mm | Ex 9 | 76.6 | 49.3 | -7.4 | -0.2 |

Table 3

| Pane thicknesses mm/mm | Glass composition | LT % | DSHT% | a* | b* |
|---|---|---|---|---|---|
| 1.6/1.6 | Ex 6 | 71.4 | 43.6 | -8.8 | 2.2 |
| 1.65/1.65 | Ex 6 | 70.8 | 42.8 | -9.1 | 2.3 |
| 1.7/1.7 | Ex 5 | 71.7 | 43.7 | -9.0 | 2.4 |
| 1.7/1.7 | Ex 6 | 70.3 | 42.1 | -9.3 | 2.3 |
| 1.8/1.8 | Ex 5 | 70.7 | 42.2 | -9.4 | 2.5 |

## Claims

1. A process for the production of glass sheets with optimised properties for the production of automotive glazing which comprises preparing a glass melt comprising, as colourant, iron in an amount of from 0.9 to 1.15% by weight, with a ferrous iron to total iron ratio in the range 0.18 to 0.35, and successively forming molten glass of said composition into glass sheet of thickness in the range 1.9 mm to 2.3 mm, and glass sheet of thickness in one of the two ranges
    3.3 mm to 3.8 mm
    and 1.5 mm to 1.8 mm.

2. A process according to claim 1 wherein the molten glass is successively formed into glass sheet of three different thicknesses, each of said thicknesses being within a different one of said ranges 1.9 to 2.3 mm, 3.3 to 3.8 mm and 1.5 to 1.8 mm.

3. Use of tinted glass sheets produced by the process of claim 1 or claim 2 for the production of

    (a) a laminated automotive windshield comprising a tinted glass pane having a thickness in the range 1.9 mm to 2.3 mm, laminated to a clear glass pane, whereby the windshield has a light transmission of at least 75% and a direct solar heat transmission of less than 56%, and either
    (b) a toughened automotive glazing having a thickness in the range 3.3 mm to 3.8 mm, the glazing having a light transmission of at least 70% and a direct solar heat transmission of less than 46%, or
    (c) a laminated automotive side light or rear light comprising two panes of the same tinted glass.

4. Use as claimed in claim 3 of the tinted glass sheets for the production of each of the products (a), (b) and (c) defined in claim 3.

**Patentansprüche**

1.  Verfahren zur Herstellung von Glasplatten mit optimierten Eigenschaften für die Herstellung von Kraftfahrzeug-Verglasung, das Herstellen einer Glasschmelze, die Eisen als Färbemittel in einer Menge von 0,9 bis 1,15 Gew.-% bei einem Verhältnis Eisen(II) zu Gesamteisen im Bereich von 0,18 bis 0,35 aufweist, und sukzessives Formen einer Glasplatte mit einer Dicke im Bereich von 1,9 mm bis 2,3 mm und einer Glasplatte mit einer Dicke in einem der zwei Bereiche

    3,3 mm bis 3,8 mm und
    1,5 mm bis 1,8 mm

    aus geschmolzenem Glas der Zusammensetzung umfasst.

2.  Verfahren nach Anspruch 1, wobei das geschmolzene Glas sukzessive zu Glasplatten mit drei verschiedenen Dicken geformt wird und jede der Dicken in einem anderen der Bereiche 1,9 bis 2,3 mm, 3,3 bis 3,8 mm und 1,5 bis 1,8 mm liegt.

3.  Verwendung getönter Glasplatten, die nach dem Verfahren nach Anspruch 1 oder Anspruch 2 hergestellt wurden, zur Herstellung:

    (a) einer laminierten Windschutzscheibe, welche eine getönte Glasscheibe, die eine Dicke im Bereich von 1,9 mm bis 2,3 mm hat, auf eine klare Glasscheibe laminiert aufweist, wodurch die Windschutzscheibe eine Lichtdurchlässigkeit von mindestens 75 % und eine Durchlässigkeit für direkte Sonnenhitze von weniger als 56 % hat, und entweder

    (b) einer gehärteten Kraftfahrzeug-Verglasung, die eine Dicke im Bereich von 3,3 mm bis 3,8 mm hat, wobei die Verglasung eine Lichtdurchlässigkeit von mindestens 70 % und eine Durchlässigkeit für direkte Sonnenhitze von weniger als 46 % hat, oder

    (c) eines laminierten Kraftfahrzeug-Seitenlichts oder -Rücklichts, das zwei Scheiben desselben getönten Glases aufweist.

4.  Verwendung der getönten Glasplatten nach Anspruch 3 zur Herstellung jedes der in Anspruch 3 definierten Produkte (a), (b) und (c).

**Revendications**

1.  Procédé pour la production de feuilles de verre ayant des propriétés optimisées pour la production de vitres d'automobiles, qui comprend la préparation d'une masse de verre fondue comprenant, comme matière colorante, du fer en une quantité de 0,9 à 1,15 % en poids, avec un rapport du fer ferreux au fer total compris dans l'intervalle de 0,18 à 0,35, et successivement la transformation du verre fondu de ladite composition en une feuille de verre ayant une épaisseur comprise dans l'intervalle d'1,9 mm à 2,3 mm, et une feuille de verre ayant une épaisseur comprise dans un des deux intervalles

    3,3 mm à 3,8 mm,
    et 1,5 mm à 1,8 mm.

2.  Procédé suivant la revendication 1, dans lequel le verre fondu est transformé successivement en une feuille de verre de trois épaisseurs différentes, chacune desdites épaisseurs étant comprise dans un intervalle différent faisant partie desdits intervalles d'1,9 à 2, 3 mm, 3,3 à 3,8 mm et 1,5 à 1,8 mm.

3.  Utilisation de feuilles de verre teinté produites par le procédé suivant la revendication 1 ou la revendication 2 pour la production

    (a) d'un pare-brise stratifié d'automobile, comprenant un panneau de verre teinté ayant une épaisseur comprise dans l'intervalle d'1,9 mm à 2,3 mm, stratifié à un panneau de verre transparent, le pare-brise ayant ainsi une transmission de la lumière d'au moins 75 % et une transmission de chaleur solaire directe inférieure à 56 %, et soit
    (b) d'une vitre renforcée d'automobile ayant une épaisseur comprise dans l'intervalle de 3,3 mm à 3,8 mm, la vitre présentant une transmission de la lumière d'au moins 70 % et une transmission de chaleur solaire directe inférieure à 46 %, soit

(c) d'un feu latéral ou feu arrière stratifié d'automobile, comprenant deux panneaux du même verre teinté.

4. Utilisation suivant la revendication 3 des feuilles de verre teinté pour la production de chacun des produits (a), (b) et (c) définis dans la revendication 3.